**Europäisches Patentamt**

**European Patent Office**

**Office européen des brevets**

(11) Numéro de publication : **0 499 540 B1**

(12) **FASCICULE DE BREVET EUROPEEN**

(45) Date de publication du fascicule du brevet :
**06.09.95 Bulletin 95/36**

(21) Numéro de dépôt : **92400378.3**

(22) Date de dépôt : **13.02.92**

(51) Int. Cl.⁶ : **G01J 5/00,** B23K 26/02, G01N 25/72

(54) **Procédé de contrôle d'un traitement de surface réalisé par balayage d'un faisceau radiatif en particulier d'un faisceau laser.**

(30) Priorité : **14.02.91 FR 9101735**

(43) Date de publication de la demande :
**19.08.92 Bulletin 92/34**

(45) Mention de la délivrance du brevet :
**06.09.95 Bulletin 95/36**

(84) Etats contractants désignés :
**DE DK ES GB IT**

(56) Documents cités :
**US-A- 4 663 513**
**US-A- 4 817 020**
**OPTICAL ENGINEERING, vol. 25, no. 6, 1 Juin 1986, pages 799-805; M.A. KHAN et al.: "Infrared Thermography as a Control"**
**JOURNAL OF VACUUM SCIENCE AND TECHNOLOGY B, vol. B6, no. 6, 1 Décembre 1988, pages 1900-1905; S. PALMER et al. : "A heating model for excimer laser projection processing"**

(56) Documents cités :
**JOURNAL DE PHYSIQUE COLLOQUE C7, vol. 48-C7, no. 12, 1 Décembre 1987, pages 91-96; J. DIETZ et al.: "Caractérisation du faisceau et modélisation en vue de l'optimisation des traitements thermiques laser"**
**PATENT ABSTRACTS OF JAPAN vol. 10, no. 324 (P-512)(2380) 5 Novembre 1986 ; & JP-A-61 130 834**

(73) Titulaire : **ETAT-FRANCAIS représenté par le DELEGUE GENERAL POUR L'ARMEMENT 26, Boulevard Victor F-00460 Armées (FR)**

(72) Inventeur : **Bataille, François 77 avenue de Saint-Cloud F-78000 Versailles (FR)**
Inventeur : **Kechemair, Didier 10 rue Martin Bernard F-75013 Paris (FR)**
Inventeur : **Sabatier, Lilian 4 rue G. Taille Ferre F-94110 Arcueil (FR)**

EP 0 499 540 B1

## Description

L'invention concerne un procédé de contrôle d'un traitement de surface réalisé sur une zone superficielle d'une pièce par balayage d'un faisceau radiatif, en particulier d'un faisceau laser continu, permettant d'améliorer la reproductibilité du traitement de surface, de simplifier les recherches des paramètres de ce traitement, et de l'appliquer à des pièces de géométrie complexes.

Cette invention est issue des travaux conjoints de la Société BERTIN, & CIE et de l'Etablissement Technique Central de l'Armement (Arcueil).

Le document intitulé "Infrared thermography as a control for the Welding process" (M.A. KHAN et al) décrit un procédé de contrôle des procédés de soudage utilisant des moyens de thermographie infrarouge et consistant à relever périodiquement un profil de température à la surface d'une pièce à l'aide de moyens de thermographie infrarouge puis à transmettre ces données à un microprocesseur qui les traite, afin de déterminer la profondeur de métal en fusion et/ou la présence d'impuretés, et génère des signaux de commande des moyens de soudage.

Un tel procédé ne permet pas un contrôle de traitement de surface autre que dans le cadre du soudage.

L'un des buts de l'invention est de remédier à cet inconvénient en proposant un procédé de contrôle d'un traitement de surface selon la revendication 1.

L'évaluation en temps réel des températures en volume dans la pièce à partir de mesures de température effectuées sur la surface de la pièce, permet de contrôler simultanément et en temps réel une température en surface ainsi qu'une température en volume dans la pièce par rétroaction sur la puissance du faisceau et sur la vitesse de balayage, ce qui permet de réaliser un traitement thermique donné sur une profondeur donnée et donc de conférer à la pièce des caractéristiques mécaniques déterminées.

Selon une autre caractéristique de l'invention, ce procédé consiste également à rechercher le point situé à une profondeur donnée dans l'épaisseur de la pièce, dont la température est maximale.

Pour cela, le procédé consiste à calculer les températures en deux points situés à la même profondeur dans la pièce à la verticale de deux points du segment de droite précité, à déterminer celui de ces deux points qui a la température la plus élevée, à déplacer le point de calcul d'une distance prédéterminée vers ce point ayant la température la plus élevée, et à répéter ces calculs pour déterminer le maximum de température de la pièce à une profondeur donnée.

Le calcul de la température en un point situé dans l'épaisseur de la pièce est réalisé au moyen d'une fonction de convolution, en tenant compte de l'épaisseur de la pièce sous le point de calcul et en approximation monodimensionnelle.

On peut ainsi calculer la température en n'importe quel point situé dans l'épaisseur de la pièce à la verticale d'un point de surface considéré.

De façon à pouvoir effectuer le calcul en temps réel, le procédé prévoit de calculer à l'avance les fonctions de convolution pour une intégration tenant compte d'un nombre prédéterminé de profils de température relevés à la surface de la pièce.

Le procédé selon l'invention permet, de façon générale, de contrôler en temps réel la qualité d'un traitement de surface réalisé par balayage d'un faisceau radiatif, notamment d'un faisceau laser continu, et peut s'appliquer à n'importe quel traitement de surface comprenant un balayage par un faisceau radiatif, dont la puissance peut être modulée à des fréquences qui peuvent être comprises entre 1 et 100 Hz par exemple.

L'invention sera mieux comprise et d'autres caractéristiques, détails et avantages de celle-ci apparaitront plus clairement à la lecture de la description qui suit, faite à titre d'exemple en référence aux dessins annexés dans lesquels :

la figure 1 représente schématiquement les moyens de mise en oeuvre du procédé selon l'invention;

la figure 2 représente schématiquement une pièce comportant une zone superficielle traitée conformément à l'invention.

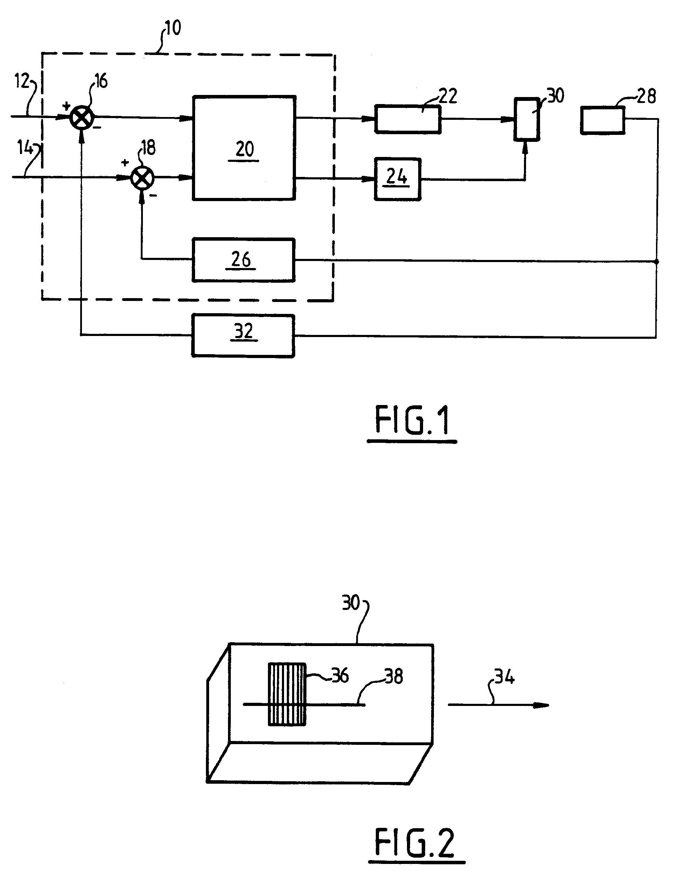

Le système de mise en oeuvre de l'invention, représenté schématiquement en figure 1, comprend essentiellement un micro-ordinateur 10 du type "IBM-PC" par exemple, comprenant un processeur de type 386 et un co-processeur arithmétique capables de réaliser un certain nombre de fonctions à partir des moyens représentés schématiquement sous forme de blocs en figure 1 et qui comprennent :

- une entrée 12 d'une consigne de température de surface de la pièce à traiter, et une entrée 14 d'une consigne de température en profondeur dans la pièce à traiter,
- un comparateur 16 recevant la consigne de température superficielle et un signal de température mesurée sur la pièce, et un comparateur 18 recevant la consigne de température en profondeur et un signal représentant une température calculée en profondeur dans la pièce,
- des moyens 20 recevant les signaux de sortie des comparateurs 16 et 18 et générant des signaux de commande appliqués respectivement à un générateur laser 22 tel qu'un laser $CO_2$ continu d'une puis-

sance de plusieurs kW et à des moyens 24 de déplacement dans une direction donnée de la pièce à traiter,

- et des moyens 26 de calcul en temps réel de la température d'un point situé dans l'épaisseur de la pièce à une profondeur déterminée, la sortie de ces moyens de calcul étant reliée au comparateur 18.

Le système comprend également un moyen 28, tel qu'un pyromètre optique à balayage ligne, permettant de relever des températures en surface de la pièce 30 et de générer des signaux de sortie correspondant à ces températures, pour les transmettre d'une part aux moyens 26 de calcul de température en profondeur et d'autre part à des moyens 32 de détection analogique de maximum, dont la sortie est reliée au comparateur 16.

Le procédé selon l'invention est mis en oeuvre de la façon suivante :

la pièce 30 est déplacée par les moyens 24 dans une direction indiquée par la flèche 34 en figure 2 et subit un traitement superficiel sur une zone 36 de sa surface exposée au faisceau émis par le générateur laser 22.

Le pyromètre 28 permet de relever, à une fréquence déterminée, des profils de température sur la surface traitée de la pièce 30, ces profils étant acquis par exemple par un balayage permettant de mesurer l'émission infrarouge de points d'un segment de droite 38 à la surface de la pièce 30, le segment de droite 38 ayant une position fixe par rapport à la zone traitée 36 et coupant cette zone traitée, ce segment 38 étant de préférence parallèle à la direction de déplacement de la pièce (ou à la direction de balayage du faisceau laser).

Les signaux de sortie du pyromètre optique 28, correspondant aux températures des points du segment de droite 38 sont numérisés, convertis en valeurs de température et enregistrés en mémoire.

Par exemple, le segment de droite peut avoir une longueur d'environ 10 cm, et comprendre cent points de mesure de température. Le profil des températures correspondant à ce segment peut être relevé toutes les 20 millisecondes par exemple.

Le procédé selon l'invention permet de reconstituer, à un instant donné, l'évolution thermique dans le temps d'un point précis de la surface de la pièce 30 par interpolation spatiale de plusieurs profils de température comprenant ce point. Une fonction de convolution permet ensuite de calculer la température en n'importe quel point de la pièce, situé à la verticale du point de surface considéré, le calcul étant fait en tenant compte de l'épaisseur de la pièce sous le point de calcul, et en approximation monodimensionnelle.

Cette fonction de convolution permet de calculer très rapidement des solutions approchées des équations de diffusion de la chaleur dans la pièce.

De façon plus détaillée, le calcul de la température atteinte par un point en profondeur de la pièce 30 à partir de l'historique des températures en un point de la surface est réalisé en approximation monodimensionnelle à partir de la fonction de Green d'un solide soumis à un écoulement monodimensionnel sous une condition de Dirichlet (température imposée) d'un côté et une condition de Neumann (flux imposé) de l'autre côté, la fonction de Green s'exprimant par la relation suivante:

$$v(z,z',t,a) = \sum_{n=1}^{\infty} \frac{4}{a} \sin(\alpha_n z) \sin(\alpha_n z') e^{-\kappa \alpha_n^2 t}$$

$$\text{avec } \alpha_n a = \pm \frac{2n-1}{2}\pi$$

v représentant l'échauffement créé à la profondeur z au temps t par un échauffement ponctuel à la profondeur z' au temps O, a étant l'épaisseur de la pièce à traiter.

La température à la profondeur z au temps t est alors donnée par :

$$T(z,t) = \kappa \int_o^t T(z=o, t-\tau) \frac{\partial}{\partial z'} v (z, z' = o, \tau, a) d\tau$$

On calcule cette température au moyen de la formule suivante :

$$T(z, n\,\Delta t) = \kappa \sum_{k=o}^{n} T(z=o, (n-k)\Delta t) \int_{k\,\Delta t}^{(k+1)\Delta t} \frac{\partial v}{\partial z'} (z, z'=o, \tau, a) d\tau$$

En pratique, les intégrales de la fonction ci-dessus sont calculées à l'avance pour diverses épaisseurs de matériau et l'on a alors à calculer en temps réel un produit de convolution discret de la forme indiquée ci-dessous :

$$T\ (z,\ n\Delta t)\ =\ \kappa \sum_{k=0}^{\min(40,n)}\ T\ [n-k]\ convo[k]$$

avec

$$convo\ [k,a]=\ \int_{k\ \Delta\ t}^{(k+1)\Delta\ t}\ \frac{\partial y}{\partial z'}\ (z,z'=0,\tau,a)d\tau$$

et $T\ [k] = T(z=0, k\ \Delta\ t)$ = température mesurée en surface

Ce calcul est effectué sur 40 valeurs de températures précédemment relevées en surface à des intervalles de 20 ms lorsque la pièce est en acier.

Pour effectuer un suivi en temps réel du maximum de température à une profondeur donnée dans la pièce, le procédé prévoit de calculer les températures en deux points situés à la même profondeur dans la pièce et écartés l'un de l'autre d'une distance déterminée, à la verticale du segment de droite 38. On sélectionne ensuite le point ayant la température la plus élevée et on déplace dans le repère de calcul, le point de calcul d'une distance prédéterminée dans la direction du point le plus chaud.

Par exemple, les deux points situés à la même profondeur et dont on calcule les températures peuvent être distants de 1mm. Le point de calcul est ensuite déplacé de 0,5 mm (pour de l'acier) dans la direction du point le plus chaud.

Lorsque la pièce 30 est en matériau très conducteur (par exemple en cuivre ou en aluminium), il n'est pas nécessaire de tenir compte de tous les profils de température relevés successivement à des intervalles de 20 millisecondes, mais il est par contre intéressant de tenir compte d'une évolution thermique sur un intervalle de temps plus important. On peut donc utiliser pour ces matériaux très conducteurs de la chaleur un nombre de profils de température égal par exemple à 160, et tenir compte d'un profil de température sur 4, ce qui conduit à calculer les fonctions de convolution pour une intégration tenant compte de 40 profils de température séparés les uns des autres par des intervalles de temps de 80 millisecondes.

Chaque calcul permettant le suivi d'un maximum de température de la pièce à une profondeur donnée, peut être effectué en un temps inférieur à 10 millisecondes sur un micro-ordinateur du type décrit en référence à la figure 1.

Les signaux de sortie des moyens 32 de détection analogique de maximum et des moyens 26 de calcul de température en profondeur sont appliqués aux comparateurs 16 et 18 respectivement, qui reçoivent également les consignes de température en surface et de température en profondeur. Les signaux de sortie de ces comparateurs, qui correspondent aux différences entre les consignes et, respectivement, le maximum de température en surface, d'une part, et la température en profondeur, d'autre part, sont appliqués aux entrées des moyens 20 de commande du générateur laser 22 et des moyens 24 de déplacement de la pièce, pour régler la puissance du laser et la vitesse de déplacement (vitesse de balayage).

On peut ainsi, par exemple, contrôler le traitement thermique en fonction des maxima de température en surface et à une profondeur donnée et de leur évolution, et par exemple déterminer une durée de maintien possible d'une au moins de ces températures au-dessus de la consigne.

Il est également possible, au prix d'une plus grande complexité des calculs, de relever une carte bidimensionnelle des températures de surface de la pièce, pour calculer ensuite les températures en profondeur.

L'invention permet donc un contrôle en temps réel de la qualité d'un traitement de surface effectué par balayage d'un faisceau laser sur une pièce, et permet par commande en temps réel de la puissance du faisceau laser et de la vitesse de balayage d'obtenir un traitement de surface de qualité déterminée, tel qu'une trempe superficielle sur une épaisseur donnée constante.

De façon générale, l'invention est applicable à n'importe quel traitement de surface utilisant un balayage de la surface d'une pièce et une modulation de la puissance du laser ou d'un autre élément chauffant, à une fréquence de l'ordre de 1 à 100 Hz par exemple.

EP 0 499 540 B1

## Revendications

1. Procédé de contrôle d'un traitement de surface réalisé sur une zone d'une pièce (30) par balayage d'un faisceau radiatif, en particulier d'un faisceau laser continu, consistant à relever périodiquement et à enregistrer en mémoire un profil de température à la surface de la pièce (30), par exemple le long d'un segment de droite (38) passant par la zone traitée (36) de la pièce, à calculer en temps réel la température en au moins un point situé dans l'épaisseur de la pièce à la verticale d'un point dudit segment de droite, au moyen d'une fonction de convolution, en tenant compte de l'épaisseur de la pièce, de ses caractéristiques thermiques et de profils de température enregistrées en mémoire, à comparer les valeurs de la température relevées en surface et calculées en profondeur à des valeurs correspondantes de consigne, et à commander en temps réel et en fonction des résultats de ces comparaisons la puissance du faisceau utilisé pour le raitement de surface et/ou la vitesse de balayage, par le faisceau, de la zone traitée (36) de la pièce.

2. Procédé selon la revendication 1, consistant à calculer les températures en deux points situés à la même profondeur dans la pièce à la verticale du segment de droite précité, à déterminer celui de ces deux points qui a la température la plus élevée, à déplacer le point de calcul d'une distance prédéterminée vers le point à la température la plus élevée, et à répéter ces calculs pour déterminer le maximum de température de la pièce à la profondeur considérée.

3. Procédé selon l'une quelconque des revendications 1 et 2, consistant à calculer à l'avance les fonctions de convolution pour une intégration tenant compte d'un nombre prédéterminé de profils de température enregistrés en mémoire.

4. Procédé selon l'une quelconque des revendications 1 à 3, dans lequel le segment de droite (38) est parallèle à la direction de déplacement (34) de la pièce ou à la direction de balayage du faisceau.

5. Procédé selon l'une quelconque des revendications 1 à 4, consistant à relever le profil de température du segment de droite (38) par mesure de son émission infrarouge en un certain en un certain nombre de ses points, au moyen d'un pyromètre optique (28) à balayage ligne.

## Patentansprüche

1. Verfahren zur Prüfung einer Oberflächenbehandlung durch Zonenabtastung eines Teils (30) mit einem radiativen Strahl, insbesondere einem kontinuierlichen Laserstrahl. Das Verfahren besteht darin, in regelmässigen Abständen ein Profil der Temperaturen an der Oberfläche des Teils (30), z.B. über die Länge eines die behandelte Zone (36) des Teils passierenden Streckenabschnitts (38) zu messen und zu speichern, die Temperatur an mindestens einem in der Dicke des Teils vertikal zu einem Punkt dieses Streckenabschnitts liegenden Punkt mittels einer Konvolutionsfunktion unter Berücksichtigung der Dicke des Teils, seiner wärmetechnischen Eigenschaften und der gespeicherten Temperaturprofile in Echtzeit zu errechnen, die an der Oberfläche gemessenen und in der Dicke errechneten Temperaturwerte mit entsprechenden Sollwerten zu vergleichen und gemäss den Ergebnissen dieser Vergleiche in Echtzeit die Leistung des für die Oberflächenbehandlung und/oder die Abtastgeschwindigkeit der behandelten Zone (36) des Teils benutzten Strahls zu steuern.

2. Verfahren gemäss Patentanspruch 1, das darin besteht, die Temperaturen an zwei in gleicher Tiefe des Teils vertikal zum zuvor erwähnten Streckenabschnitt liegenden Punkten zu errechnen, unter den beiden Punkten den Punkt mit der höheren Temperatur zu ermitteln, den Errechnungspunkt über eine vorher festgelegte Entfernung zum Punkt mit der höheren Temperatur zu verschieben und diese Berechnungen zu wiederholen, um die maximale Temperatur des Teils in der betrachteten Tiefe zu ermitteln.

3. Verfahren gemäss Patentanspruch 1 oder 2, das darin besteht, im voraus die Konvolutionsfunktionen für eine Integration unter Berücksichtigung einer vorher festgelegten Zahl von gespeicherten Temperaturprofilen zu errechnen.

4. Verfahren gemäss einem der Patentansprüche 1 bis 3, in welchem der Streckenabschnitt (38) parallel zur Richtung der Verschiebung (34) des Teils oder zur Abtastrichtung des Strahls verläuft.

5

5. Verfahren gemäss einem der Patentansprüche 1 bis 4, das darin besteht, das Temperaturprofil des Streckenabschnitts (38) durch Messen seiner Infrarot-Emission anhand eines optischen Pyrometers (28) mit Linienabtastung an einer gewissen Zahl von Punkten zu bestimmen.

## Claims

1. A method of control of a surface treatment carried out on the region of a workpiece (30) by means of radiative beam scanning, in particular, a continuous laser beam, consisting in measuring periodically and recording in memory a temperature profile at the workpiece (30) surface, for example, along a straight line segment (38) traversing the processed region (36) of the workpiece, in computing the temperature in real time in at least one point located in the workpiece thickness vertical to a point of the said straight line segment, by means of a convolution function, while taking into account the workpiece thickness, its thermal characteristics and temperature profiles recorded in memory, compare the temperature values noted on the surface and computed in depth at corresponding values of instruction, and depending on the results of these comparions, in controlling in real time, the power of the beam used for this surface treatment and/or the scanning speed by means of the beam of the processed region (36) of the workpiece.

2. A method according to claim 1, consisting in computing the temperatures in two points located at the same depth in the workpiece vertical to the previously mentioned straight line segment, determining which of the two points has the highest temperature, moving the computing point by a predetermined distance towards the point having the highest temperature, and repeating these computations in order to determine the maximum degree of temperature of the workpiece at the considered depth.

3. A method according to any of claims 1 and 2, consisting in computing in advance the convolution function for an integration taking into account a predetermined number of temperature profiles recorded in memory.

4. A method according to any of claims 1 to 3, according to which straight line segment (38) is parallel to the displacement direction (34) of the workpiece or to the scanning direction of the beam.

5. A method according to any of claims 1 to 4, consisting in reading the temperature profile of the straight line segment (38) by measuring its infrared emission in a certain number of its points by means of an optical pyrometer (28) using line scanning.

FIG.1

FIG.2

7